Europäisches Patentamt

European Patent Office

Office européen des brevets

(11) Veröffentlichungsnummer: **0 222 160**
**B1**

(12) **EUROPÄISCHE PATENTSCHRIFT**

(45) Veröffentlichungstag der Patentschrift:
02.05.90

(21) Anmeldenummer: 86113912.9

(22) Anmeldetag: 07.10.86

(51) Int. Cl.⁴: **B64C 1/14**

(54) **Betätigungsvorrichtung für ein Frachtladetor.**

(30) Priorität: 07.11.85 DE 3539480

(43) Veröffentlichungstag der Anmeldung:
20.05.87 Patentblatt 87/21

(45) Bekanntmachung des Hinweises auf die Patenterteilung:
02.05.90 Patentblatt 90/18

(84) Benannte Vertragsstaaten:
FR GB SE

(56) Entgegenhaltungen:
EP-A- 0 105 082
WO-A-84/01761

(73) Patentinhaber: Messerschmitt-Bölkow-Blohm GmbH,
D-8012 Ottobrunn(DE)

(72) Erfinder: Kupfernagel, Artur, Ebereschenweg 5,
D-2805 Stuhr 1(DE)

## Beschreibung

Die Erfindung betrifft eine Betätigungsvorrichtung für ein Frachtladetor eines Flugzeuges, das mit je einer von außen zu betätigenden Öffnungs- und Schließvorrichtung, einer Verriegelungseinrichtung sowie einer Verriegelungskontrolleinrichtung versehen ist.

Betätigungsvorrichtungen dieser Art sind bereits bekannt und sowohl in Fracht- als auch in Passagierflugzeugen mit zusätzlichen Frachträumen im Einsatz. Dabei ist es bekannt, daß neben einer separaten Bedienungsvorrichtung für den Öffnungs- und Schließmechanismus des Frachtladetors eine manuell oder hydraulisch betriebene Betätigungsvorriohtung vorgesehen ist, die auf eine zentrale Verriegelungswelle wirkt, durch die über Koppelglieder mehrere Verriegelungshaken zur Arretierung des Frachtladetors in der geschlossenen Position aktiviert werden. Zusätzlich ist bei einer der bekannten Anordnungen ein manueller Abtastmechanismus verriegelte Position der Haken und der Verriegelungswelle abgetastet werden kann und der zugleich eine im Frachtladetor angeordnete Druckausgleichklappe betätigt.

Aufgabe der Erfindung ist es in diesem Zusammenhang, eine Betätigungsvorrichtung der eingangs genannten Art so auszubilden, daß sie die Betätigung sowohl der Verriegelungs- als auch der Verriegelungskontrolleinrichtung mittels nur eines manuellen Bedienungselementes gestattet und dabei zugleich eine zuverlässige und störungssichere Verriegelung des Frachtladetors gewährleistet.

Diese Aufgabe wird dadurch gelöst, daß zur Betätigung der Verriegelungs- sowie der Verriegelungskontrolleinrichtung ein gemeinsamer Betätigungshebel vorgesehen ist, der um zwei zueinander angenähert senkrecht stehende Achsen schwenkbar gehaltert ist und der mit der Verriegelungseinrichtung einerseits und der Verriegelungskontrolleinrichtung andererseits jeweils derartig gelenkig verbunden ist, daß einer Schwenkbewegung um seine erste Schwenkachse eine Betätigung der Verriegelungskontrolleinrichtung und einer Schwenkbewegung um seine zweite Schwenkachse eine Betätigung der Verriegelungseinrichtung entspricht.

Die Zusammenfassung der beiden Bedienungsfunktionen "Verriegeln/Entriegeln" sowie "Verriegelungskontrolle" in nur einem Bedienungselement entsprechend der Erfindung ermöglicht es dabei, den zeitlichen Ablauf dieser beiden Funktionen so vorzusehen, daß die jeweils zeitlich nachgeordnete nur dann erfolgen kann, wenn die vorausgehende ordnungsgemäß und störungsfrei durchgeführt worden ist. Das bedeutet, daß der Kontrollvorgang erst vollzogen werden kann, wenn der Verriegelungsvorgang vollständig abgeschlossen ist und umgekehrt eine Entriegelung erst nach dem Lösen aller Kontrollelemente möglich ist.

In den Unteransprüchen sind vorteilhafte Weiterbildungen der erfindungsgemäßen Betätigungsvorrichtung angegeben, die vor allem Einzelheiten betreffen, die einer Erhöhung der Funktionssicherheit sowie der Sicherstellung des oben angegebenen Funktionsablaufs dienen. Zugleich eröffnen sie die Möglichkeit, die Verriegelungskontrolleinrichtung zur Blockierung der Verriegelungsvorrichtung gegenüber einem nicht vorgesehenen, unbeabsichtigten Lösen zu benutzen.

Im folgenden soll die Erfindung anhand eines in der Zeichnung dargestellten Ausführungsbeispiels näher erläutert werden. Es zeigen:

Fig. 1 ein Frachtladetor eines Flugzeuges mit einer erfindungsgemäßen Betätigungsvorrichtung,

Fig. 2 einen Detailschnitt in Richtung A-A durch die in Fig. 1 dargestellte Anordnung,

Fig. 3 einen Teil der in Fig. 2 gezeigten Anordnung in einer anderen Betätigungsposition,

Fig. 4 den mit "X" bezeichneten Ausschnitt aus Fig. 1 in rückwärtiger Ansicht,

Fig. 5 einen Schnitt gemäß A-A in Fig. 4,

Fig. 6 einen Schnitt gemäß B-B in Fig. 4,

Fig. 7 einen Schnitt gemäß C-C in Fig. 4,

Fig. 8 einen Schnitt gemäß D-D in Fig. 4,

Fig. 9 den mit "Y" bezeichneten Ausschnitt aus Fig. 1 in rückwärtiger Ansicht,

Fig. 10 die Anordnung gemäß Fig. 9 in geschnittener Darstellung und

Fig. 11 einen Detailschnitt gemäß A-A in Fig. 10.

In den Fig. sind jeweils gleiche bzw. einander entsprechende Bauteile mit den gleichen Bezugszeichen versehen.

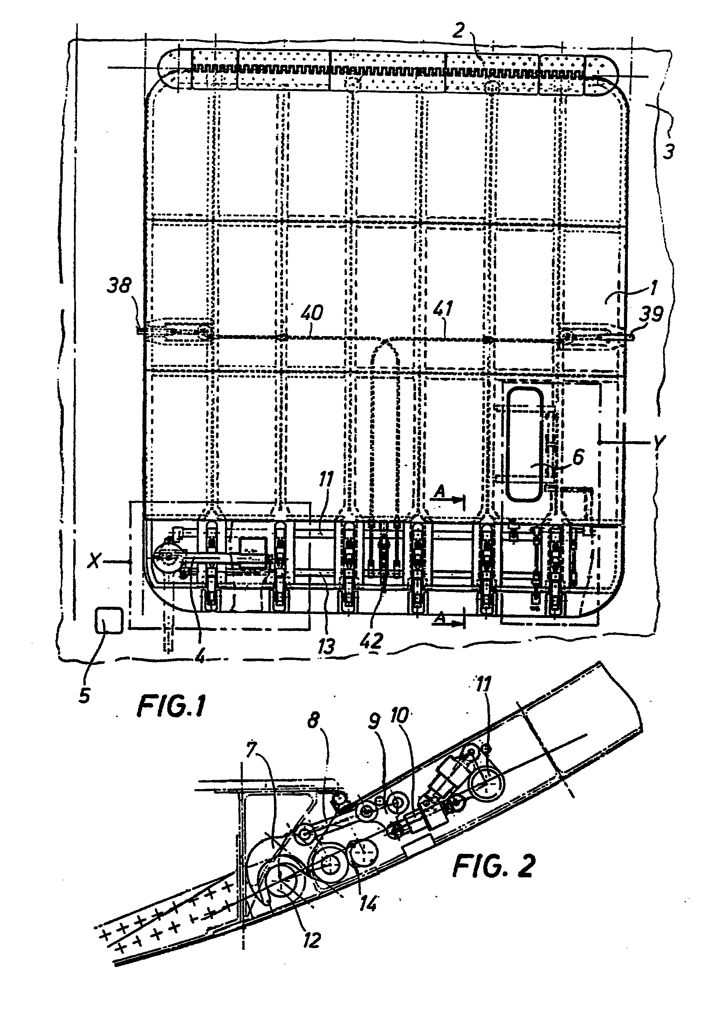

Bei dem in Fig. 1 dargestellten Ausführungsbeispiel der Erfindung handelt es sich um ein Frachtladetor, in diesem Fall ein Unterflurfrachttor eines Verkehrsflugzeuges.

Die äußere Form des Frachtladetors 1 ist durch die Außenkontur des Flugzeuges sowie die Öffnungsweite der zu verschließenden Frachtladeöffnung vorgegeben. Das Tor ist an seinem oberen Randbereich mittels einer Reihe von Scharnieren 2 an der Flugzeugstruktur 3 angelenkt. Im unteren Randbereich des Frachtladetors 1 sind eine Verriegelungseinrichtung zur Verriegelung des Tores in seiner geschlossenen Stellung sowie eine Verriegelungskontrolleinrichtung, die der Sicherstellung der Verriegelung dient, angeordnet. Auf Einzelheiten dieser beiden Einrichtungen wird im Zusammenhang mit den nachfolgenden Figuren näher eingegangen werden.

In Fig. 1 ist weiterhin ein auf die erwähnten Einrichtungen wirkender Betätigungshebel 4 sowie - schematisch - eine Bedienungseinrichtung 5 für die Öffnungs- und Schließeinrichtung des Frachtladetors 1, auf die in diesem Zusammenhang nicht näher eingegangen werden soll, dargestellt. Schließlich ist in Fig. 1 noch eine Druckausgleichsklappe 6 dargestellt, die ebenfalls noch näher erläutert werden wird.

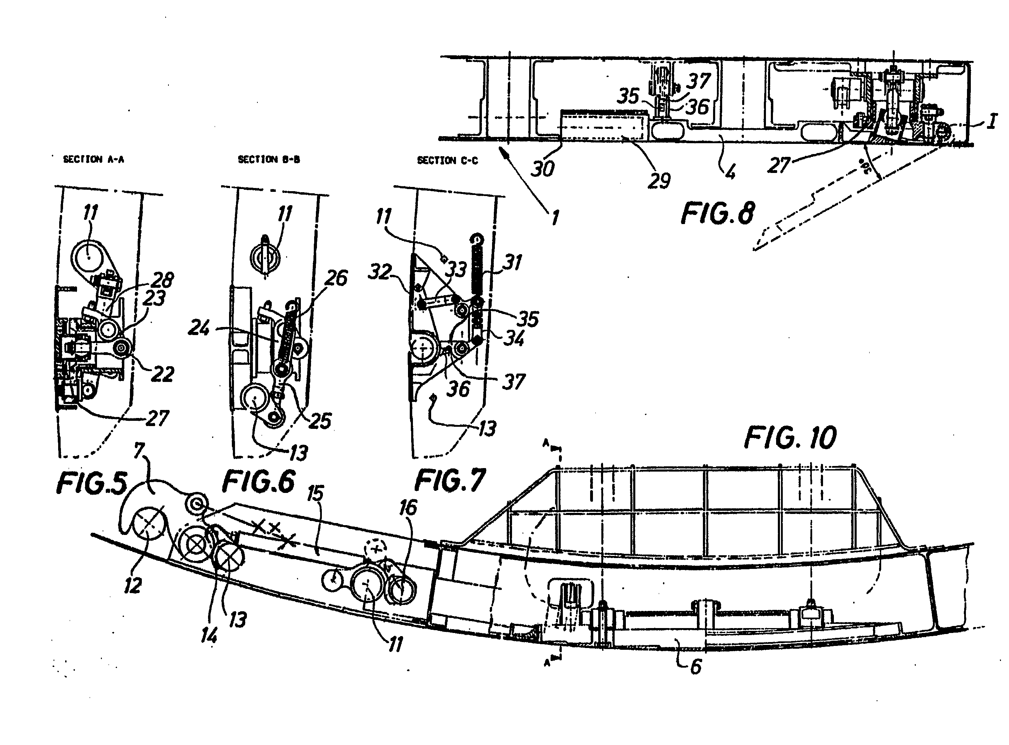

Der genaue Aufbau der Verriegelungseinrichtung, der Verriegelungskontrolleinrichtung sowie der zugehörigen Betätigungsvorrichtung geht aus den Fig. 2 bis 11 hervor.

Die Verriegelungseinrichtung besteht im wesentlichen aus Verriegelungshaken 7, die drehbeweglich gelagert sind und über Koppelelemente 8 bis 10 exzentrisch an einer Verriegelungswelle 11 angelenkt sind. Die Verriegelungshaken wirken zusammen mit Verriegelungsstiften 12, die fest mit der Flugzeugstruktur 3 verbunden sind.

Parallel zur Verriegelungswelle 11 ist eine Sicherungswelle 13 angeordnet. Diese ist jeweils in denjenigen Bereichen ihrer Längserstreckung, die den Verriegelungshaken 7 benachbart liegen, mit exzentrisch angeordneten Nocken 14 versehen. Ferner wirkt die Sicherungswelle 13 über eine Kopplungsanordnung 15 bis 18 sowie eine Kegelradgetriebe 19 auf die Druckausgleichsklappe 6, die unter der Vorspannung zweier Federn 20, 21 in Öffnungsrichtung steht.

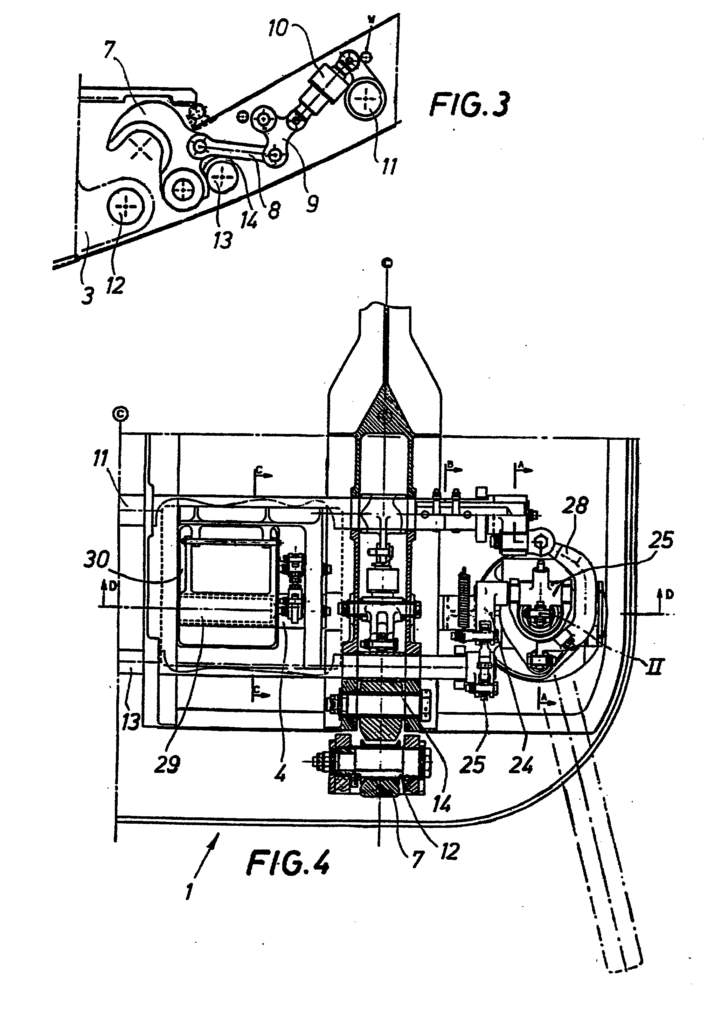

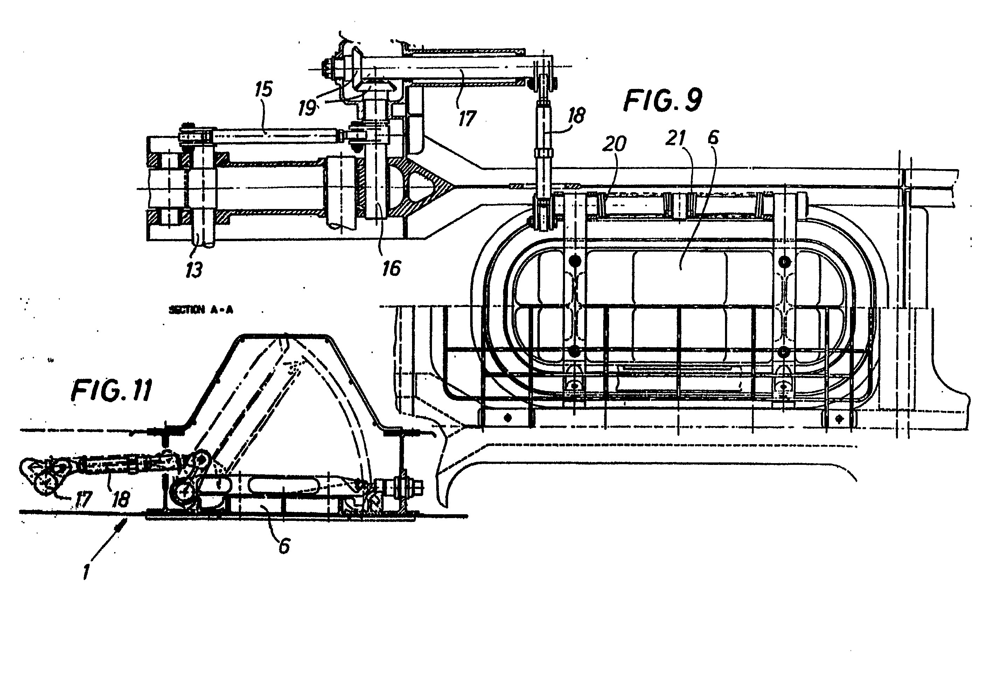

Zur Betätigung sowohl der Verriegelungseinrichtung 7 bis 11 als auch der Verriegelungskontrolleinrichtung 13 bis 19 ist der Betätigungshebel 4 an der Außenseite des Frachtladetors 1 angeordnet. Dieser einarmige Hebel ist um zwei zueinander angenähert senkrecht stehende Achsen I und II schwenkbar gehaltert und schließt in seiner in den Figuren durchgezogen dargestellten Ruheposition strakbündig mit der Außenkontur des Frachtladetors 1 ab. Wie aus den Fig. 8 bzw. 4 ersichtlich ist, führt ein Verschwenken des Betätigungshebels 4 um seine erste Schwenkachse I zu einer Rotationsbewegung dieses Hebels 4 aus der Kontur des Frachtladetors 1 heraus in eine etwa 30° abgewinkelte Position. Ein Verschwenken um seine zweite Schwenkachse II hingegen hat eine Rotationsbewegung zufolge, deren Ebene angenähert parallel zur Außenkontur des Frachtladetors 1 verläuft.

Der Betätigungshebel 4 ist, wie aus den Fig. 4 bis 8 ersichtlich, über entsprechende Koppelelemente sowohl mit der Verriegelungswelle 11 als auch mit der Sicherungswelle 13 verbunden. Die Verbindung zur Sicherungswelle 13 erfolgt dabei über eine Verbindungsstange 22, einen ersten Hebel 23, der mit einem zweiten Hebel 24 gekoppelt ist, sowie über eine zweite Verbindungsstange 25. Eine Feder 26 hält den Betätigungshebel 4 dabei in seinen beiden Endpositionen in bezug auf die Schwenkachse I in Übertotpunktlage. Unter einem Beschlag 27 sowie eine weitere Verbindungsstange 28 ist der Betätigungshebel 4 schließlich mit der Verriegelungswelle 11 verbunden.

Der Betätigungshebel 4 ist ferner, wie aus den Fig. 1, 4 und 8 hervorgeht, so in bezug auf das Frachtladetor 1 angeordnet, daß ein an seinem äußeren Ende angebrachter Handgriff 29 in der Ruheposition des Betätigungshebels 4 in einer Öffnung 30 der Außenverkleidung des Frachtladetors 1 liegt. Diese Öffnung 30 ist durch eine bewegliche, von einer Feder 31 beaufschlagte Klappe 32 konturbündig verschließbar. Zugleich betätigt die Klappe 32 über ein federbelastetes Gestänge 33 und 34 einen Verriegelungshaken 35, der hinter einen an einem Ansatz 36 des Betätigungshebels 4 angeordneten Sicherungsstift 37 greift.

Schließlich umfaßt die Verriegelungskontrolleinrichtung noch zwei weitere Sicherungsstifte 38 und 39, die in etwa in halber Höhe des Frachtladetors 1 seitlich angeordnet sind und die in entsprechende Ausnehmungen in der Rumpfstruktur greifen. Diese Stifte dienen in erster Linie dazu, eine glatte Außenkontur im Übergangsbereich zwischen dem Frachtladetor 1 und dem Flugzeugrumpf 3 sicherzustellen.

Sie sind jeweils über Kabelzüge 40 und 41 mit der Sicherungswelle 13 gekoppelt.

Weitere Einzelheiten der erfindungsgemäßen Betätigungsanordnung gehen aus der nachfolgenden Funktionsbeschreibung hervor. Zunächst sei angemerkt, daß im Fall des hier beschriebenen Ausführungsbeispiels der Erfindung sowohl die Bedienungseinrichtung 5 für das Öffnen und Schließen des Frachtladetors 1 und die Verriegelungskontrolleinrichtung so am Flugzeugrumpf angeordnet sind, daß sie ohne Hilfsmittel vom Boden aus zugänglich sind.

Für den zunächst zu beschreibenden Ablauf des Entriegelungsvorganges des Frachtladetors 1 wird davon ausgegangen, daß sich das Tor im geschlossenen, verriegelten und gesicherten Zustand befindet. Der Betätigungshebel 4 schließt in diesem Zustand, d.h. in seiner Ruheposition, strakbündig mit der Außenkontur des Frachtladetors 1 ab, wobei die Öffnung 30 von der Klappe 32 verschlossen wird. Auch die Druckausgleichsklappe 6 ist in diesem Zustand geschlossen.

Indem nun die Klappe 32 gegen die Kraft der Feder 31 nach innen gedrückt wird, wird über das ebenfalls federbelastete Gestänge 33, 34 der Verriegelungshaken 35 zurückgeschwenkt und dadurch die Arretierung des Betätigungshebels 4 gelöst. Zugleich wird der Handgriff 29 des Betätigungshebels 4 zugänglich, und der Betätigungshebel 4 kann nunmehr um seine erste Schwenkachse I um den konstruktionsbedingt vorgegebenen Winkelbereich von etwa 30° nach außen, d.h. aus der Kontur des Frachtladetors 1 heraus, geschwenkt werden, wo er von der Feder 26 in der eingenommenen Position gehalten wird.

Durch diese Schwenkbewegung wird über die Verbindungsstange 22 der Hebel 23 betätigt, der seinerseits über den zweiten Hebel 24 und die zweite Verbindungsstange 25 die Sicherungswelle 13 verdreht. Infolge der Drehung der Sicherungswelle 13 wird zum einen über das Kegelradgetriebe 19 sowie die Kopplungsanordnung 15 bis 18 die Druckausgleichsklappe 6 geöffnet, zum anderen werden die auf der Sicherungswelle 13 in Höhe der Verriegelungshaken 7 angeordneten Sicherungsnocken 14 in eine Position gebracht, in der die Haken 7 für ein Verschwenken freigegeben werden. Ferner werden die Sicherungsstifte 38 und 39 in die Struktur des Frachtladetors 1 eingezogen. Bei nicht exakt ausgeführter Entsicherung, d.h. sofern der Betätigungshebel nicht in die vorgesehene neue Endlage nach außen verschwenkt wurde, blockieren die Sicherungsnocken 14 weiterhin die Verriegelungshaken 7, so daß diese nicht gelöst werden können.

Sofern die Entsicherung exakt durchgeführt wurde, kann nunmehr durch Verschwenken des Betätigungshebels 4 um seine zweite, angenähert horizontal und damit senkrecht zur Außenfläche des Frachtladetors 1 verlaufende Schwenkachse II um etwa 105° im Uhrzeigersinn (d.h. aus einer angenähert waagerechten in eine in etwa senkrechte Position) der eigentliche Entriegelungsvorgang erfolgen, bei dem die Sicherungswelle 13 mit den Sicherungsnocken 14 nicht mehr mitbewegt wird.

Bei diesem Entriegelungsvorgang wird durch das Verschwenken des Betätigungshebels 4 der Lagerbeschlag 27 dieses Hebels in Drehung versetzt und betätigt über die sichelförmige Verbindungsstange 28 die Verriegelungswelle 11. Dadurch werden die jeweils aus den Verriegelungshaken 7 sowie den diesen zugeordneten Verriegelungsstiften 12 bestehenden Verriegelungselemente für das Frachtladetor 1 voneinander getrennt.

Nachdem sich durch diesen Vorgang sowohl die Verriegelungswelle 11 als auch die Verriegelungshaken 7 aus ihrer ursprünglichen Position entfernt haben, kann der Betätigungshebel 4 nicht mehr aus der um 30° nach außen verschwenkten Lage in die strakbündige Ausgangsposition zurückgedrückt werden, da nunmehr die Sicherungsnocken 14 ihrerseits durch die Verriegelungshaken 7 blockiert werden, so daß eine Drehung der Sicherungswelle 13 nicht mehr möglich ist. In diesem Zustand kann das Frachtladetor 1 durch die separate Öffnungseinrichtung geöffnet werden.

Bei der Beschreibung des Funktionsablaufs für den Verriegelungsvorgang wird davon ausgegangen, daß das Frachtladetor 1 geschlossen, entriegelt und entsichert ist.

Durch Drehen des Betätigungshebels 4, der sich noch immer in der um 30° aus der Außenkontur des Frachtladetors herausgeschwenkten Position befindet, aus der angenähert senkrechten in die waagerechte Position (entgegen dem Uhrzeigersinn) wird der Verriegelungsvorgang eingeleitet. Über den Lagerbeschlag 27 sowie die Verbindungsstange 28 und die Verriegelungswelle 11 werden alle Verriegelungshaken 7 in Eingriff mit den zugeordneten Sicherungsstiften 12 gebracht.

Da nunmehr die Sicherungsnocken 14 und damit die Sicherungswelle 13 für eine Drehbewegung freigegeben sind, kann jetzt der Betätigungshebel 4 in seine strakbündige Ruheposition gedrückt werden. Dabei werden über die Verbindungsstange 22 die Hebel 23 und 24 betätigt und über die Verbindungsstange 25 die Sicherungswelle 13 so gedreht, daß sämtliche Verriegelungshaken 7 sowie die Verriegelungswelle 11 über die Sicherungsnocken 14 auf ihre richtige, d.h. verriegelte Position hin abgetastet und zugleich blockiert werden. Ferner wird gleichzeitig die Druckausgleichsklappe 6 geschlossen, so daß diese zugleich als Kontroll- bzw. Anzeigeinstrument für eine einwandfrei erfolgte Verriegelung dient. Außerdem werden bei diesem Vorgang die Sicherungsstifte 38 und 39 in ihre ausgefahrene Position gebracht.

Der Betätigungshebel 4 rastet bei dieser Schwenkbewegung über eine Anlaufschräge des Verriegelungshakens 35 ein und wird damit in seiner strakbündigen Ruheposition arretiert.

Abschließend sei noch angemerkt, daß eine zusätzliche, im mittleren Bereich des Frachtladetors 1 angeordnete, federbelastete Blockiereinrichtung 42 verhindert, daß die Verriegelungswelle 11 und damit der Betätigungshebel 4 bei vollständig geöffnetem Frachtladetor 1 bewegt werden kann. Dies wird vielmehr erst möglich, wenn durch das Schließen des Tores die Blockiereinrichtung 42 durch ein an der Rumpfstruktur angeordnetes Gegenstück außer Kraft gesetzt worden ist.

**Patentansprüche**

1. Betätigungsvorrichtung für ein Frachtladetor eines Flugzeuges, das mit je einer von außen zu betätigenden Öffnungs- und Schließeinrichtung, einer Verriegelungsvorrichtung sowie einer Verriegelungskontrolleinrichtung versehen ist, dadurch **gekennzeichnet**, daß zur Betätigung der Verriegelungseinrichtung (7 bis 11) sowie der Verriegelungskontrolleinrichtung (13 bis 19) ein gemeinsamer Betätigungshebel (4) vorgesehen ist, der um zwei angenähert senkrecht zueinander stehenden Achsen (I, II) schwenkbar gehaltert ist und der mit der Verriegelungsvorrichtung (7 bis 11) einerseits und der Verriegelungskontrolleinrichtung (13 bis 19) andererseits jeweils derart gelenkig verbunden ist, daß einer Schwenkbewegung um seine erste Schwenkachse (I) eine Betätigung der Verriegelungskontrolleinrichtung (13 bis 19) und einer Schwenkbewegung um seine zweite Schwenkachse (II) eine Betätigung der Verriegelungseinrichtung (7 bis 11) entspricht.

2. Betätigungsvorrichtung nach Anspruch 1, dadurch **gekennzeichnet**, daß die erste Schwenkachse (I) des Betätigungshebels (4) in angenähert vertikaler Richtung verläuft.

3. Betätigungsvorrichtung nach Anspruch 2, dadurch **gekennzeichnet**, daß die zweite Schwenkachse (II) des Betätigungshebels (4) in etwa senkrecht zur Außenkontur des Frachtladetors (1) verläuft.

4. Betätigungsvorrichtung nach einem der Ansprüche 1 bis 3, dadurch **gekennzeichnet**, daß der Betätigungshebel (4) über eine Koppeleinrichtung (27, 28) mit einer Verriegelungswelle (11) verbunden ist, die ihrerseits über weitere Koppelelemente (8 bis 10) mit schwenkbaren Verriegelungshaken (7) verbunden ist, denen entsprechende Verriegelungsstifte (12) in der Rumpfstruktur (3) des Flugzeuges zugeordnet sind.

5. Betätigungsvorrichtung nach Anspruch 4, dadurch **gekennzeichnet**, daß der Betätigungshebel (22 bis 25) mit einer Sicherungswelle (13) verbunden ist, die in etwa parallel zur Verriegelungswelle (11) angeordnet ist und die mit Sicherungsnocken (14) versehen ist.

6. Betätigungsvorrichtung nach Anspruch 5, dadurch **gekennzeichnet**, daß die Sicherungsnocken den Verriegelungshaken (7) benachbart angeordnet und mit diesen in Eingriff bringbar sind.

7. Betätigungsvorrichtung nach Anspruch 6, dadurch **gekennzeichnet**, daß die Sicherungswelle (13) mit einer Druckausgleichsklappe (6) verbunden ist.

8. Betätigungsvorrichtung nach einem der Ansprüche 1 bis 7, dadurch **gekennzeichnet**, daß zur Verriegelung des Betätigungshebels (4) in seiner inoperativen Stellung, bei geschlossenem, verriegeltem und gesichertem Frachtladetor (1) eine zusätzliche Arretiervorrichtung (35 bis 37) vorgesehen ist.

9. Betätigungsvorrichtung nach einem der Ansprüche 1 bis 8, dadurch **gekennzeichnet**, daß der Betätigungshebel (4) derart an der Struktur des Frachtladetors (1) gehaltert ist, daß er in seiner inoperativen Position strakbündig mit der Außenkontur des Frachtladetors (1) abschließt.

10. Betätigungsvorrichtung nach Anspruch 9, dadurch **gekennzeichnet,** daß in der Außenkontur des Frachtladetores (1) im Bereich eines am äußeren Ende des Betätigungshebels (4) angeordneten Handgriffes (29) eine Ausnehmung (30) vorgesehen ist, die durch eine schwenkbare federbelastete Klappe (32) verschließbar ist.

11. Betätigungsvorrichtung nach Anspruch 10, dadurch **gekennzeichnet,** daß die Klappe (32) mit der Arretiervorrichtung (35 bis 37) für den Betätigungshebel gekoppelt ist.

12. Betätigungsvorrichtung nach einem der Ansprüche 5 bis 11, dadurch **gekennzeichnet,** daß die Sicherungswelle (13) mit zusätzlichen, an den Außenseiten des Frachtladetors (1) angeordneten und in dessen Struktur einziehbaren Sicherungsstiften (38, 39) verbunden ist.

13. Betätigungsvorrichtung nach einem der Ansprüche 1 bis 12 für ein an seiner Oberseite schwenkbar an der Flugzeugstruktur gehaltertes Unterflurfrachtladetor, dadurch **gekennzeichnet,** daß der Betätigungshebel (4) im unteren Bereich des Frachtladetors (1) angeordnet ist.

## Claims

1. An actuating device for a cargo loading door of an aircraft, which is provided with an opening and closing device, a locking device and a locking check device, each of which can be actuated from the outside, characterised in that, provided for the actuation of the locking device (7 to 11) and the locking check device (13 to 19) is a common actuating lever (4) which is mounted for pivoting about two axes (I, II) substantially perpendicular to one another, and which is articulately connected to the locking device (7 to 11) on the one hand and to the locking check device (13 to 19) on the other hand, in such a manner that a pivotal movement about its first pivotal axis (I) corresponds to actuation of the locking check device (13 to 19) and a pivotal movement about its second pivotal axis (11) corresponds to actuation of the locking device (7 to 11).

2. An actuating device according to Claim 1, characterised in that the first pivotal axis (I) of the actuating lever (4) extends substantially in the vertical direction.

3. An actuating device according to Claim 2, characterised in that the second pivotal axis (II) of the actuating lever (4) extends substantially perpendicularly to the outside contour of the cargo loading door (1).

4. An actuating device according of anyone of Claims 1 to 3, characterised in that the actuating lever (4) is connected, via a coupling device (27, 28), to a locking shaft (11) which in turn is connected, through further coupling elements (8 to 10), to pivotable locking hooks (7) with which there are associated corresponding lockings pins (12) in the fuselage structure (3) of the aircraft.

5. An actuating device according to Claim 4, characterised in that the actuating lever (22 to 25) is connected to a security shaft (13) which is arranged substantially parallel to the locking shaft (11) and is provided with securing cams (14).

6. An actuating . device according to Claim 5, characterised in that the securing cams are disposed adjacent to the locking hooks (7) and can be brought into engagement with these.

7. An actuating device according to Claim 6, characterised in that the security shaft (13) is connected to a pressure-equalization flap (6).

8. An actuating device according to any one of Claims 1 to 7, characterised in that an additional detent device (35 to 37) is provided to lock the actuating lever (4) in its inoperative position with the cargo loading door (1) closed, locked and secured.

9. An actuating device according to any one of Claims 1 to 8, characterised in that the actuating lever (4) is mounted on the structure of the cargo loading door (1) in such a manner that, in its inoperative position, it terminates absolutely flush with the outside contour of the cargo loading door (1).

10. An actuating device according to Claim 9, characterised in that provided in the outside contour of the cargo loading door (1), in the region of a handle (29) disposed at the outer end of the actuating lever (4), is a recess (30) which can be closed by a hinged spring-loaded flap (32).

11. An actuating device according to Claim 10, characterised in that the flap (32) is coupled to the detent device (35 to 37) for the actuating lever.

12. An actuating device according to any one of Claims 5 to 11, characterised in that the security shaft (13) is connected to additional securing pins (38, 39) which are disposed at the outsides of the cargo loading door (1) and can be retracted into its structure.

13. An actuating device according to any one of Claims 1 to 12 for an under-floor cargo loading door which, at its top, is pivotally mounted on the aircraft structure, characterised in that the actuating lever (4) is disposed in the lower region of the cargo loading door (1).

## Revendications

1. Dispositif de manœuvre d'une porte de chargement de fret d'un avion, qui est respectivement pourvu d'un dispositif d'ouverture et d'un dispositif de fermeture manœuvrables de l'extérieur, d'un dispositif de verrouillage et d'un dispositif de contrôle de verrouillage, caractérisé en ce qu'il est prévu pour la manœuvre du dispositif de verrouillage (7 à 11) ainsi que du dispositif de contrôle de verrouillage (13 à 19), un levier de manœuvre commun (4) qui est fixé de manière orientable autour de deux axes (I, II) sensiblement perpendiculaires entre eux et qui est respectivement relié par une articulation au dispositif de verrouillage (7 à 11) d'une part et au dispositif de contrôle de verrouillage (13 à 19) d'autre part, de telle sorte qu'à un mouvement pivotant autour de son premier axe de pivotement (I) correspond une manœuvre du dispositif de contrôle de verrouillage (13 à 19) et à un mouvement pivotant autour de son deuxième axe de pivotement (II) une manœuvre du dispositif de verrouillage (7 à 11).

2. Dispositif de manœuvre selon la revendication 1, caractérisé en ce que le premier axe de pivotement (I) du levier de manœuvre (4) s'étend dans une direction sensiblement verticale.

3. Dispositif de manœuvre selon la revendication 2, caractérisé en ce que le deuxième axe de pivotement (II) du levier de manœuvre (4) s'étend à peu près perpendiculairement au contour extérieur de la porte de chargement de fret (1).

4. Dispositif de manœuvre selon l'une des revendications 1 à 3, caractérisé en ce que le levier de manœuvre (4) est relié par un dispositif d'accouplement (27, 28) à un arbre de verrouillage (11) qui est relié, pour sa part, au moyen d'autres éléments d'accouplement (8 à 10), à des crochets de verrouillage (7) pivotants, auxquels sont adjointes des chevilles de verrouillage (12) appropriées dans la structure de la carlingue (3) de l'avion.

5. Dispositif de manœuvre selon la revendication 4, caractérisé en ce que le levier de manœuvre (25) est relié à un arbre de sûreté (13), qui est disposé à peu près parallèlement à l'arbre de verrouillage (11) et est pourvu de cames de sécurité.

6. Dispositif de manœuvre selon la revendication 5, caractérisé en ce que les cames de sécurité sont disposées au voisinage des crochets de verrouillage (7) et peuvent être mises en prise avec ceux-ci.

7. Dispositif de manœuvre selon la revendication 6, caractérisé en ce que l'arbre de sûreté (13) est relié à un volet d'équilibre de pression (6).

8. Dispositif de manœuvre selon l'une des revendications 1 à 7, caractérisé en ce qu'il est prévu pour le verrouillage du levier de manœuvre (4) dans sa position non active un dispositif d'arrêt supplémentaire (35 à 37), la porte de chargement de fret étant fermée, verrouillée et bloquée.

9. Dispositif de manœuvre selon l'une des revendications 1 à 8, caractérisé en ce que le levier de manœuvre (4) est maintenu sur la structure de la porte de chargement de fret (1) de telle sorte qu'il s'achève, dans sa position non active, au ras du contour extérieur de la porte de chargement de fret (1).

10. Dispositif de manœuvre selon la revendication 9, caractérisé en ce qu'il est prévu dans le contour extérieur de la porte de chargement de fret (1) dans la région d'une poignée (29) disposée à l'extrémité extérieure du levier de manœuvre (4) un évidement (30), qui peut être fermé au moyen d'un volet (32 pivotant chargé par ressort.

11. Dispositif de manœuvre selon la revendication 8 et 10, caractérisé en ce que le volet (32) est accouplé avec le dispositif d'arrêtage (35 à 37) du levier de manœuvre.

12. Dispositif de manœuvre selon l'une des revendications 5 à 11, caractérisé en ce que l'arbre de sûreté (12) est relié à des chevilles de sûreté supplémentaires (38, 39) disposées sur les faces extérieures de la porte de chargement de fret et rétractables dans sa structure.

13. Dispositif de manœuvre selon l'une des revendications 1 à 12, pour une porte de chargement de fret en soute, dont la face supérieure peut pivoter autour de son support sur la structure de l'avion, caractérisé en ce que le levier de manœuvre (4) est disposé dans la région inférieure de la porte de chargement de fret.

**FIG.1**

**FIG. 2**

EP 0 222 160 B1

FIG.3

FIG.4

FIG.8

FIG.10

FIG.7

FIG.6

FIG.5

SECTION C-C

SECTION B-B

SECTION A-A

FIG. 9

FIG. 11

SECTION A-A